# EUROPEAN PATENT SPECIFICATION

(11) **EP 3 587 030 B1**
(45) Date of publication and mention of the grant of the patent: **31.08.2022**
(21) Application number: 19183195.7
(22) Date of filing: 28.06.2019
(51) Int. Cl.: B23Q 11/00, B23B 29/02, F16F 7/10

(54) **DEVICE FOR ACTIVELY CONTROLLING VIBRATIONS IN A MACHINE TOOL**
VORRICHTUNG ZUR AKTIVEN KONTROLLE VON SCHWINGUNGEN IN EINER WERKZEUGMASCHINE
DISPOSITIF POUR LE CONTRÔLE ACTIF DES VIBRATIONS DANS UNE MACHINE-OUTIL

(30) Priority: 29.06.2018 IT 201800006811
(43) Date of publication of application: 01.01.2020
(73) Proprietor: Universita' degli studi di Brescia, 25121 Brescia (IT)
(72) Inventor: AGGOGERI, Francesco, 25121 BRESCIA (IT); PELLEGRINI, Nicola, 25087 SALO' (IT); MERLO, Angelo, 20093 COLOGNO MONZESE (IT)
(74) Representative: Giraldi, Elisa

(56) References cited:
- EP-A1- 3 241 647
- WO-A1-92/20482
- DE-A1-102007 025 934

## Description

### TECHNICAL FIELD

The present invention belongs to the field of mechanical machining, such as by way of non-limiting example, milling (in particular with removal of turnings) and/or surface finishing and/or the like. The present invention in particular relates to a device adapted to actively control (in particular, attenuate and/or damp) the vibrations arising from machining of the aforesaid type. In detail, the object of the present invention is a device adapted to be interposed between the end-effector (tool) of an operating machine adapted to carry out mechanical operations of the aforesaid type, and the main structure of the machine itself so that the vibrations generated by the end-effector or tool are not transmitted or are only partially transmitted to said main structure.

### BACKGROUND ART

The problem of the vibrations generated by the machining itself is known in the field of mechanical machining. It is indeed known that if the vibrations are not actively controlled, and therefore if they are transmitted to the main structure of the operating machine, they often represent a decisive factor which has a negative effect both on the functionality of the machine and on the stability thereof. Indeed, the vibrations are a wear factor of the component parts, wherein the component parts are subject to more frequent breakdowns and/or failures due to the vibrations to which they are subjected. Moreover, the vibrations are a factor which significantly increases both the fatigue and the risk of accidents for the operators requested to carry out the mechanical operations of the aforesaid type.

Various solutions have been therefore proposed and are currently used in the known art in order to "shield and/or "protect" at least the structure of the machine in which the component parts selected to move the tool are housed, from the vibrations, thereby avoiding an accelerated wear and preserving them from breakdowns and/or failures. Likewise, various solutions to make using the operating machines to execute the machining of the aforesaid type less burdensome for the operators, are known in the prior art.

However, the known solutions currently available in the field of mechanical machining have drawbacks and/or disadvantages which the present invention intends overcoming or at least minimizing.

A first drawback relates to the reduced versatility of the known solutions, wherein if they are effective for actively controlling vibrations within a predefined range (e.g. frequency range), the known solutions are not as effective outside of said predefined range; the known solutions therefore not being applicable to various operating machines; the known solutions contrarily requiring to be designed ad-hoc, each for a predefined machine.

A second drawback of the known solutions relates to the often excessive weight thereof, which compromises the application thereof to small operating machines, and which, wherein applied, reduces or even compromises the maneuverability of the machine, often increasing the fatigue (and therefore also the risk of accidents) for the operator in an unfeasible manner.

A further drawback is also the fact that the known solutions often cannot be integrated in the operating machine, but are to be applied externally to the machines themselves, with the apparent increase of the volume, and therefore with the apparent reduction of the field of application of the machines, and also with the apparent reduction of the maneuverability of the machines.

Examples of devices according to the prior art for actively controlling vibrations are known from WO 92/20482 which forms the basis for the preamble of claim 1, and EP3241647 or DE 10 2007 025934 A1.

### DESCRIPTION OF THE PRESENT INVENTION

It is therefore the object of the present invention to overcome or at least minimize the drawbacks encountered in the solutions according to the prior art, in particular in the devices according to the prior art for actively controlling the vibrations resulting or arising from mechanical machining, in particular from machining with removal of turnings and/or surface finishing and/or the like.

It is a purpose or object of the present invention in particular to make available a device of the aforesaid type, characterized by:
an increased rigidity/weight ratio; and/or
effective active damping of vibrations, in particular narrow band vibrations, generated by machining processes of the aforesaid type; and/or
improved modularity and/or versatility;
contained volume and/or weight.

Moreover, it is a further object of the present invention to make available a device of the aforesaid type which can be made, and is adapted to be industrialized, at contained costs, or at least costs which are competitive with the ones of the devices according to the prior art, and which is applicable to a wide range of operating machines without substantial modifications of the machines themselves, rather according to simple and immediate methods.

In consideration both of the disadvantages encountered in the solutions according to the known art and the objects summarized above, according to the present invention there are proposed a device for actively controlling vibrations according to claim 1 and an operating machine according to claim 6. Further embodiments of the device and the machine according to the present invention are defined by the dependent claims.

According to one embodiment as disclosed, a device for actively controlling vibrations adapted to be interposed between a tool of an operating machine and the main structure of said operating machine comprises a housing shell in which component parts of said device are housed, adapted to operate synergistically for actively controlling, in particular for reducing, the vibrations generated by said tool during use of said operating machine so that said vibrations are not transmitted to said main structure of said operating machine, wherein said component parts housed inside said housing shell comprise at least one inertial mass, which is substantially rigid and non-deformable and is adapted to be moved with respect to said housing shell, at least one accelerometer adapted to generate, when subjected to vibrations, an electric voltage for each of said vibrations, and at least one piezoelectric actuator, in electrical connection with said at least one accelerometer and interposed between said at least one mass and said housing shell, and adapted to transform each of said electric voltages into an input applied to said at least one inertial mass and thus into a displacement of said inertial mass.

According to one embodiment as disclosed, the component parts housed inside said housing shell comprise at least one flexible member interposed between said housing shell and said at least one inertial mass, so that each displacement of said inertial mass generated by said at least one piezoelectric actuator occurs against the elastic resistance exerted by said at least one flexible member.

According to one embodiment as disclosed, said at least one piezoelectric actuator is of linear type, thus wherein each of said electric voltages results in a substantially linear extension of said at least one piezoelectric actuator.

According to the invention, said housing shell is shaped in such a manner that each of the inputs applied to said at least one inertial mass by said at least one piezoelectric actuator results in a displacement on a plane of said at least one inertial mass.

According to one embodiment as disclosed, said plane of displacement of said at least one inertial mass is parallel to the extension direction of said at least one piezoelectric actuator.

According to the invention, the plan shape of said housing shell on a plane parallel to the plane of displacement of said at least one inertial mass is like a circular crown.

According to the invention, said at least one inertial mass is semicircular in shape.

According to one embodiment as disclosed, said component parts housed inside said housing shell comprise two flexible members interposed between said housing shell and said at least one inertial mass, the first of said two flexible members being arranged at an end portion of said at least one inertial mass, the second of said two flexible members being arranged at an intermediate portion of said at least one inertial mass.

Disclosed is as well an operating machine, in particular for mechanical machining such as milling and surface finishing machining or the like, said operating machine comprising at least one tool or end-effector and a main structure, said operating machine comprising a device according to one of the embodiments of the present invention.

According to one embodiment as disclosed, said device is interposed between said tool or end-effector and said main structure.

According to one embodiment as disclosed, said operating machine further comprises an interface interposed between said device and said main structure.

According to one embodiment, each individual actuator displaces the related mass along a direction parallel to the longitudinal symmetry and/or extension axis thereof.

According to one embodiment as disclosed, each actuator is localized in outer position with respect to the respective mass moved thereby.

### BRIEF DESCRIPTION OF THE DRAWINGS

The present invention is clarified below by means of the detailed description of embodiments depicted in the drawings.

In the drawings:
- figure 1 shows a diagrammatic view of a possible application to an operating machine of a device according to one embodiment of the present invention;
- figure 2 shows a partial sectional perspective view of a device according to one embodiment of the present invention;
- figure 3 shows a partial sectional plan view of a device according to one embodiment of the present invention;
- figure 4 shows a perspective view of an inertial mass of a device according to one embodiment of the present invention.

### DETAILED DESCRIPTION OF THE PRESENT INVENTION

A particularly advantageous application of the present invention is in the field of actively controlling vibrations resulting from mechanical machining, such as by way of non-limiting example, machining with removal of turnings and/or surface finishing and/or the like, this being the reason why the present invention is clarified in the following with (possible) reference to the application thereof for actively controlling vibrations resulting from mechanical machining of the aforesaid type, the possible applications of the present invention however not being limited to actively controlling vibrations resulting from mechanical machining of the aforesaid type, rather contrarily comprising actively controlling vibrations generated by mechanical machining of any type.

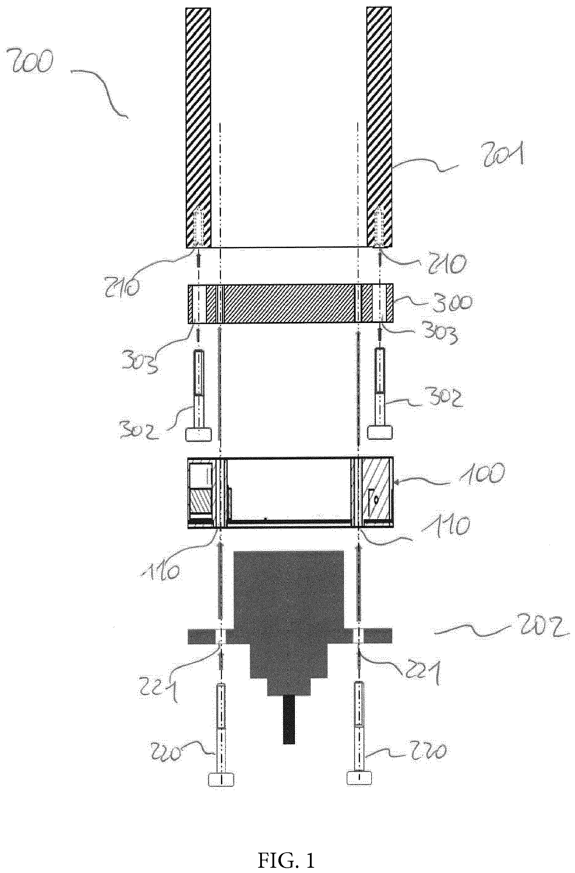

Numeral 200 in figure 1 identifies an operating machine equipped with an end-effector or tool 202 applied to the main structure 201 of machine 200. The tool is operated by means of component parts (not depicted), such as electric motors, drives and/or the like, which are substantially housed inside the main structure 201; the aforesaid component parts and the methods for actuating tool 202 by means thereof substantially being of known type, a detailed description thereof is omitted for the sake of conciseness.

Obviously, if they were not conveniently damped and/or actively controlled, the vibrations generated by tool 202 would be transmitted to structure 201, thereby generating the problems summarized above both for the machine and for an operator called to use it.

However, as illustrated, within the viewpoint of the present invention, a device 100 is interposed between tool 202 and structure 201, the device being adapted to actively control the aforesaid vibrations, thus practically shielding structure 201 from said vibrations according to methods described in detail in the following. Moreover, as illustrated, use is made of an interface 300 fastened to structure 201 by means of screws 302 housed in corresponding through holes 303 of interface 300, wherein each of the screws 302 engages a corresponding blind and internally threaded hole 210 of structure 201.

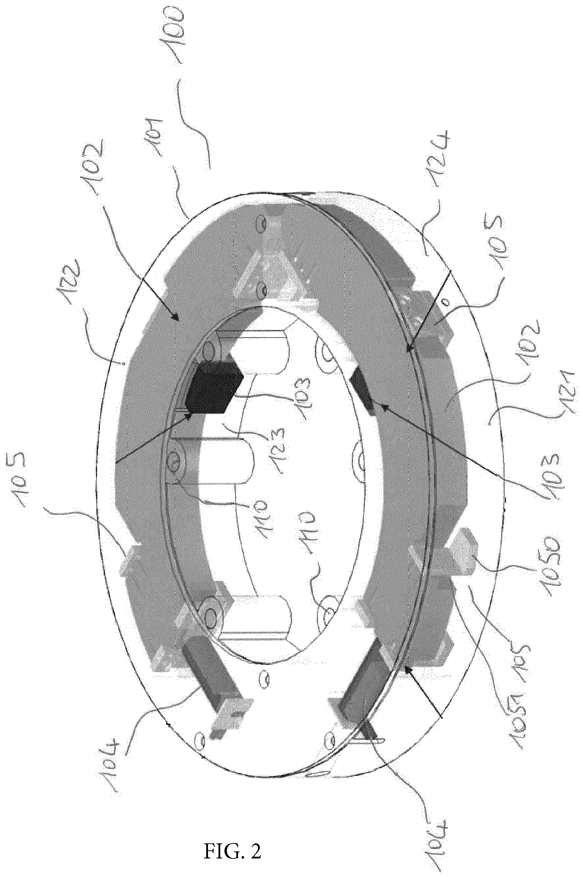

Likewise, device 100 (see also figure 2) and tool 202 each define a plurality of corresponding through holes 110 and 221, respectively, in each of which a screw or nut 220 which engages an internally threaded hole 304 of interface 300, is housed. Obviously according to the present invention, alternative and/or equivalent solutions may be provided for applying device 100 to a machine 200, the above methods therefore being indicated by way of non-limiting example.

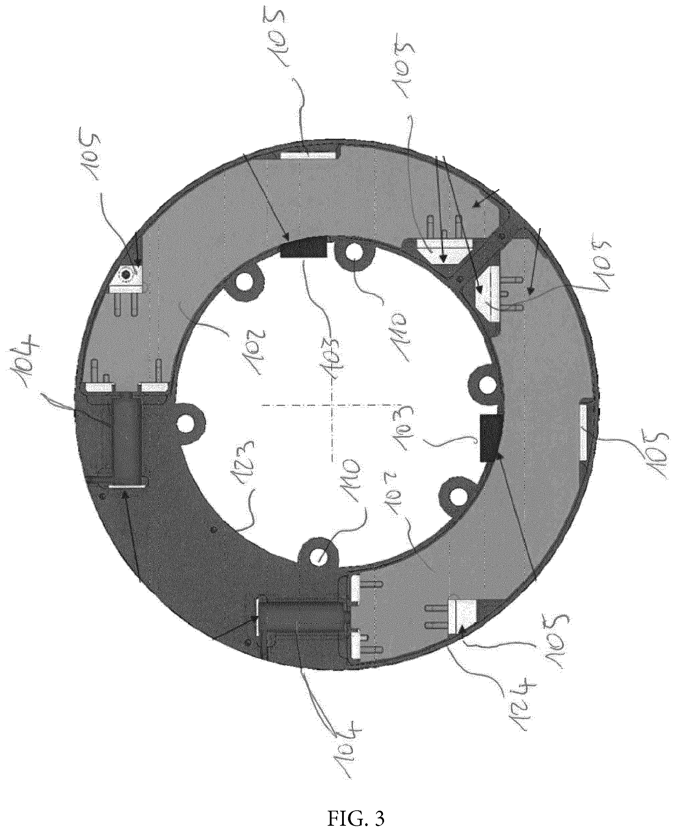

A description of further features of the device according to the present invention is given below with reference to figures 2 and 3, wherein component parts and/or features in figures 2 and 3, which were already described above with reference to other drawings, are identified by the same reference numerals.

According to the embodiment of the present invention depicted in figure 2, device 100 comprises a shell or container 101 defined by two flat, opposite walls 121 and 122, with circular crown plan, which are joined by a first substantially cylindrical inner wall 123 and a second substantially cylindrical outer wall 124. Moreover, as illustrated, the inner wall 123 defines the through holes 110 described above with reference to figure 1.

Again according to the embodiment in figures 2 and 3, two accelerometers 103, two piezoelectric actuators 104, two inertial masses 102 and a plurality of flexible members 105 are housed inside the shell or container 101.

The accelerometers, which in particular but not exclusively are of uniaxial and substantially known type, are of the type comprising a body adapted to be accelerated when subjected to vibrations, and to transform the accelerations of said body into corresponding voltage electric signals.

On the other hand, the actuators 104 are each electrically connected with an accelerometer 103 and are each adapted to transform the voltage electric inputs into displacements of an inertial mass 102, also in this case according to substantially known methods.

It is also worth noting that in the case of the embodiment in figures 2 and 3, the actuators are of the type comprehensive of a portion adapted to extend in linear manner if subjected to electric input, wherein therefore it can be deduced, in consideration of the mutual arrangement of the accelerometers 104 and of the respective masses 102 (each accelerometer being fastened to shell 101 and arranged at an end portion of the related mass 102), that each voltage signal generated by accelerometer 103 and transmitted to actuator 104 results in a linear extension of actuator 104, and therefore into a displacement on a plane parallel to the wall 121 of shell 101 of the corresponding mass 102 to which actuator 104 is applied.

In other words, under the action of the respective actuators 104, the masses 102, which are housed with respect to shell 101 so as to be moved with respect to shell 101, are each displaced on a plane X-Y which contains the parallels to the linear extension direction of the actuators 104, the displacements of each of the masses 102 being proportional to the extension of the respective actuator 104, and therefore to the electric voltage applied to actuator 104, and therefore finally to the acceleration applied to the movable body of the respective accelerator 103, the accelerations of the movable body of accelerator 103 being proportional to the vibrations perceived by the accelerator itself.

Again as depicted in figures 2 and 3, L-shaped flexible members (flexures) 105, and therefore comprehensive of a base 1050 by means of which said members 105 are each fastened to the wall 121 of shell 101, are also housed inside shell 101, in a variable number according to needs and/or circumstances, wherein each flexible member 105 comprises an extension portion 1051 which extends from said base 1050 and is fastened to a contrast and engagement wall 1020 defined by the inertial mass 102.

It is therefore to be appreciated that the above-described displacements of the inertial masses 102 (generated by the linear extension of the actuators 104) occur against the elastic resistance exerted by one or more of said flexible members 105 (of portion 1051), wherein contrarily the displacements of the masses 102 in opposite direction are promoted by the elastic thrust of said members 105.

It is therefore to be appreciated that with a device 100 of the type described above with reference to figures 2 and 3 applied to an operating machine 200 according to the methods described with reference to figure 1 (or according to equivalent methods not described herein), the vibrations generated by tool 200 are discharged onto device 100, in particular onto the masses 102, and are damped (actively controlled) by the displacements of the masses 102, the structure 201 of the device therefore not being hit by said vibrations.

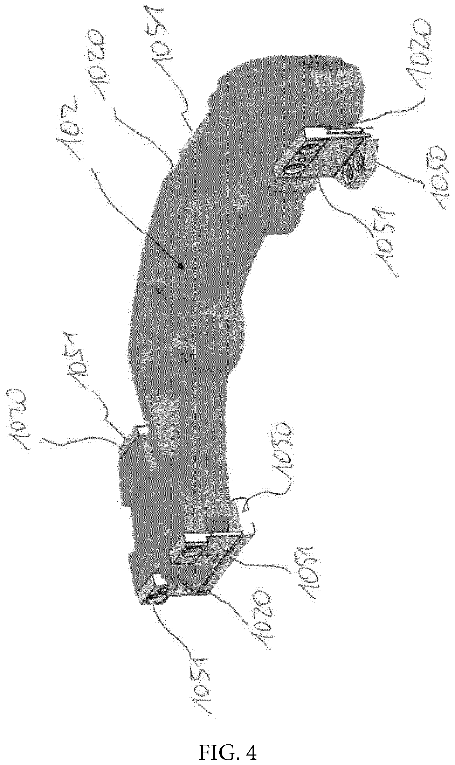

Finally as depicted in figure 4, each mass 102 has a semicircular shape which is compatible with the circular crown shape of shell 101, wherein each mass 102 comprises (defines) one or more contrast and engagement surfaces 1020 on each of which there is engaged portion 1051 of a member 105, the mutual arrangement of the walls 1020 (and therefore of the members 105), the number thereof (and therefore the number of the members 105), being selected to guide the masses 102 during the displacements thereof.

It has therefore been demonstrated by means of the above detailed description of the embodiments of the present invention depicted in the drawings, that the present invention allows the predefined objects to be obtained, thus overcoming the drawbacks encountered in the prior art.

In particular, the present invention allows:
the effective active damping of vibrations, in particular narrow band vibrations, generated by mechanical machining in general, wherein the device according to the present invention is characterized by:
   an increased rigidity/weight ratio; and/or
   improved modularity and/or versatility (for example, resulting from the interchangeability of the masses 102);
contained volume and/or weight.

Moreover, the device according to the present invention can be made and is adapted to be industrialized at contained costs, or at least costs which are competitive with the ones of the devices according to the prior art, and which is applicable to a wide range of operating machines without substantial modifications of the machines themselves, rather according to simple and immediate methods. Although the present invention was clarified above by means of the detailed description of the embodiments thereof depicted in the drawings, the present invention is not limited to the embodiments described above and depicted in the drawings.

For example, the person skilled in the art can select from a wide range of materials for making the components of the device according to the present invention, and also shapes of the components themselves.

For example, both the number and the shape of the masses 102 can vary, as well as the number and shape of the members 105, and also the mutual arrangement thereof.

Moreover, both the accelerometers 103 and the actuators 104 may be selected according to needs and/or circumstances, the number of accelerometers and/or of actuators varying according to the number and/or the shape (and the weight) of the masses 102.

In particular, an effective damping of the vibrations can be obtained by varying the number and/or type and/or arrangement of the members 105 so as to ensure rectilinear displacements of the masses 102 with a tolerance of ±10 µm. Moreover, steel inertial masses weighing 1.0 kg and with such a rigidity as to ensure a deformation thereof (when subjected to input by actuator 104) less than 20 µm have proven to be very effective for the objects of the present invention.

The scope of the present invention is therefore defined by the claims.

## Claims

1. A device (100) for actively controlling vibrations, adapted to be interposed between the tool (202) of an operating machine (200) and the main structure (201) of said operating machine (200), said device (100) comprising a housing shell (101), in which component parts of said device (100) are housed, adapted to operate synergistically for actively controlling, in particular for reducing, the vibrations generated by said tool (202) during use of said operating machine (200), so that said vibrations are not transmitted to said main structure (201) of said operating machine (200); wherein said component parts housed inside said housing shell (101) comprise at least one inertial mass (102), adapted to be moved with respect to said housing shell (101), at least one accelerometer (103) adapted to, when subjected to vibrations, generate an electric voltage for each of said vibrations, and at least one piezoelectric actuator (104), in electrical connection with said at least one accelerometer (103) and interposed between said at least one mass (102) and said housing shell (101), and adapted to transform each of said electric voltages into an input applied to said at least one inertial mass (102) and thus into a displacement of said inertial mass (102), wherein said housing shell (101) is shaped so that each of the inputs applied to said at least one inertial mass (102) by said at least one piezoelectric actuator (104) results in a displacement on a plane of said at least one inertial mass (102), **characterized in that** the plan shape of said housing shell (101) on a plane parallel to the plane of displacement of said at least one inertial mass (102) is like a circular crown, and **in that** said at least one inertial mass (102) is semicircular in shape.

2. A device (100) according to claim 1, **characterized in that** the component parts housed in said housing shell (101) comprise at least one flexible member (105) interposed between said housing shell (101) and said at least one inertial mass (102), so that each displacement of said inertial mass (102) generated by said at least one piezoelectric actuator (104) occurs against the elastic resistance exerted by said at least one flexible member (105).

3. A device (100) according to claim 1 or 2, **characterized in that** said at least one piezoelectric actuator (104) is of the linear type, thus wherein each of said electric voltages results in a substantially linear extension of said at least one piezoelectric actuator (104).

4. A device (100) according to one of claims 1 to 3, **characterized in that** said plane of displacement of said at least one inertial mass (102) is parallel to the extension direction of said at least one piezoelectric actuator (104).

5. A device (100) according to one of the claims from 2 to 4, **characterized in that** said component parts housed in said housing shell (101) comprise two flexible members (105) interposed between said housing shell (101) and said at least one inertial mass (102), the first of said two flexible members being arranged at an end portion of said at least one inertial mass (102), the second of said two flexible members being arranged at an intermediate portion of said at least one inertial mass (102).

6. An operating machine (200), in particular for mechanical machining such as milling and surface finishing machining or the like, said operating machine (200) comprising at least one tool or end-effector (202) and a main structure (201), **characterized in that** said operating machine (200) comprises a device (100) according to one of the claims from 1 to 5 interposed between said tool or end-effector (202) and said main structure (201).

7. An operating machine (200) according to claim 6, **characterized in that** said operating machine (200) further comprises an interface (300) interposed between said device (100) and said main structure (201).

## Patentansprüche

1. Vorrichtung (100) zum aktiven Steuern von Vibrationen, die dazu geeignet ist, zwischen dem Werkzeug (202) einer Arbeitsmaschine (200) und der Hauptstruktur (201) der Arbeitsmaschine (200) angeordnet zu werden, wobei die Vorrichtung (100) eine Gehäuseschale (101) umfasst, in der Bauteile der Vorrichtung (100) untergebracht sind, die dazu geeignet sind, synergetisch zu arbeiten, um die von dem Werkzeug (202) während der Verwendung der Arbeitsmaschine (200) erzeugten Vibrationen aktiv zu steuern, insbesondere zu reduzieren, so dass die Vibrationen nicht auf die Hauptstruktur (201) der Arbeitsmaschine (200) übertragen werden; wobei die in der Gehäuseschale (101) untergebrachten Bauteile mindestens eine Trägheitsmasse (102), die so beschaffen ist, dass sie in Bezug auf die Gehäuseschale (101) bewegt werden kann, mindestens einen Beschleunigungsmesser (103), der so beschaffen ist, dass er, wenn er Vibrationen ausgesetzt ist, eine elektrische Spannung für jede der Vibrationen erzeugt, und mindestens einen piezoelektrischen Aktuator (104) umfassen, der in elektrischer Verbindung mit dem mindestens einen Beschleunigungsmesser (103) steht und zwischen der mindestens einen Masse (102) und der Gehäuseschale (101) angeordnet ist, und der so beschaffen ist, dass er jede der elektrischen Spannungen in einen an die mindestens eine Trägheitsmasse (102) angelegten Eingang und somit in eine Verschiebung der Trägheitsmasse (102) umwandelt, wobei die Gehäuseschale (101) so geformt ist, dass jede der Eingaben, die durch den mindestens einen piezoelektrischen Aktuator (104) an die mindestens eine Trägheitsmasse (102) angelegt wird, zu einer Verschiebung auf einer Ebene der mindestens einen Trägheitsmasse (102) führt, **dadurch gekennzeichnet, dass** die Grundrissform der Gehäuseschale (101) auf einer Ebene parallel zu der Verschiebungsebene der mindestens einen Trägheitsmasse (102) wie eine kreisförmige Krone ist, und dass die mindestens eine Trägheitsmasse (102) eine halbkreisförmige Form hat.

2. Vorrichtung (100) nach Anspruch 1, **dadurch gekennzeichnet, dass** die in der Gehäuseschale (101) untergebrachten Bauteile mindestens ein flexibles Element (105) umfassen, das zwischen der Gehäuseschale (101) und der mindestens einen Trägheitsmasse (102) angeordnet ist, so dass jede durch den mindestens einen piezoelektrischen Aktuator (104) erzeugte Verschiebung der Trägheitsmasse (102) gegen den von dem mindestens einen flexiblen Element (105) ausgeübten elastischen Widerstand erfolgt.

3. Vorrichtung (100) nach Anspruch 1 oder 2, **dadurch gekennzeichnet, dass** der mindestens eine piezoelektrische Aktuator (104) vom linearen Typ ist, wobei also jede der elektrischen Spannungen zu einer im Wesentlichen linearen Ausdehnung des mindestens einen piezoelektrischen Aktuator (104) führt.

4. Vorrichtung (100) nach einem der Ansprüche 1 bis 3, **dadurch gekennzeichnet, dass** die Verschiebungsebene der mindestens einen Trägheitsmasse (102) parallel zur Ausdehnungsrichtung des mindestens einen piezoelektrischen Aktuators (104) verläuft.

5. Vorrichtung (100) nach einem der Ansprüche 2 bis 4, **dadurch gekennzeichnet, dass** die in der Gehäuseschale (101) untergebrachten Bauteile zwei flexible Elemente (105) umfassen, die zwischen der Gehäuseschale (101) und der mindestens einen Trägheitsmasse (102) angeordnet sind, wobei das erste der beiden flexiblen Elemente an einem Endabschnitt der mindestens einen Trägheitsmasse (102) angeordnet ist und das zweite der beiden flexiblen Elemente an einem Zwischenabschnitt der mindestens einen Trägheitsmasse (102) angeordnet ist.

6. Arbeitsmaschine (200), insbesondere für mechanische Bearbeitungen wie Fräs- und Oberflächenbearbeitungen oder dergleichen, wobei die Arbeitsmaschine (200) mindestens ein Werkzeug oder einen Endeffektor (202) und eine Hauptstruktur (201) umfasst, **dadurch gekennzeichnet, dass** die Arbeitsmaschine (200) eine Vorrichtung (100) nach einem der Ansprüche 1 bis 5 umfasst, die zwischen dem Werkzeug oder Endeffektor (202) und der Hauptstruktur (201) angeordnet ist.

7. Arbeitsmaschine (200) nach Anspruch 6, **dadurch gekennzeichnet, dass** die Arbeitsmaschine (200) ferner eine Schnittstelle (300) umfasst, die zwischen der Vorrichtung (100) und der Hauptstruktur (201) angeordnet ist.

## Revendications

1. Dispositif (100) pour contrôler activement des vibrations, apte à être interposé entre l'outil (202) d'une machine de travail (200) et la structure principale (201) de ladite machine de travail (200), ledit dispositif (100) comprenant une coque de logement (101), dans laquelle sont logés des composants dudit dispositif (100), aptes à fonctionner en synergie pour contrôler activement, en particulier pour réduire, les vibrations générées par ledit outil (202) pendant l'utilisation de ladite machine de travail (200), de sorte que lesdites vibrations ne soient pas transmises à ladite structure principale (201) de ladite machine de travail (200) ; dans lequel lesdits composants logés à l'intérieur de ladite coque de logement (101) comprennent au moins une masse inertielle (102), apte à être déplacée par rapport à ladite coque de logement (101), au moins un accéléromètre (103) apte à générer, lorsqu'il est soumis à des vibrations, une tension électrique pour chacune desdites vibrations, et au moins un actionneur piézoélectrique (104), en connexion électrique avec ledit au moins un accéléromètre (103) et interposé entre ladite au moins une masse (102) et ladite coque de logement (101), et apte à transformer chacune desdites tensions électriques en une entrée appliquée à ladite au moins une masse inertielle (102) et ainsi en un déplacement de ladite masse inertielle (102), dans lequel ladite coque de logement (101) est formée de sorte que chacune des entrées appliquées à ladite au moins une masse inertielle (102) par ledit au moins un actionneur piézoélectrique (104) résulte en un déplacement sur un plan de ladite au moins une masse inertielle (102), **caractérisé en ce que** la forme en plan de ladite coque de logement (101) sur un plan parallèle au plan de déplacement de ladite au moins une masse inertielle (102) est comme une couronne circulaire, et **en ce que** ladite au moins une masse inertielle (102) est de forme semi-circulaire.

2. Dispositif (100) selon la revendication 1, **caractérisé en ce que** les composants logés dans ladite coque de logement (101) comprennent au moins un élément flexible (105) interposé entre ladite coque de logement (101) et ladite au moins une masse inertielle (102), de sorte que chaque déplacement de ladite masse inertielle (102) généré par ledit au moins un actionneur piézoélectrique (104) se produit contre la résistance élastique exercée par ledit au moins un élément flexible (105).

3. Dispositif (100) selon la revendication 1 ou 2, **caractérisé en ce que** ledit au moins un actionneur piézoélectrique (104) est du type linéaire, ainsi dans lequel chacune desdites tensions électriques résulte en une extension sensiblement linéaire dudit au moins un actionneur piézoélectrique (104).

4. Dispositif (100) selon l'une des revendications 1 à 3, **caractérisé en ce que** ledit plan de déplacement de ladite au moins une masse inertielle (102) est parallèle à la direction d'extension dudit au moins un actionneur piézoélectrique (104).

5. Dispositif (100) selon l'une des revendications de 2 à 4, **caractérisé en ce que** lesdits composants logés dans ladite coque de logement (101) comprennent deux éléments flexibles (105) interposés entre ladite coque de logement (101) et ladite au moins une masse inertielle (102), le premier desdits deux éléments flexibles étant agencé au niveau d'une partie d'extrémité de ladite au moins une masse inertielle (102), le second desdits deux éléments flexibles étant agencé au niveau d'une partie intermédiaire de ladite au moins une masse inertielle (102).

6. Machine de travail (200), en particulier pour l'usinage mécanique tel que le fraisage et l'usinage de finition superficielle ou similaire, ladite machine de travail (200) comprenant au moins un outil ou effecteur terminal (202) et une structure principale (201), **caractérisée en ce que** ladite machine de travail (200) comprend un dispositif (100) selon l'une des revendications de 1 à 5 interposé entre ledit outil ou effecteur terminal (202) et ladite structure principale (201).

7. Machine de travail (200) selon la revendication 6, **caractérisée en ce que** ladite machine de travail (200) comprend en outre une interface (300) interposée entre ledit dispositif (100) et ladite structure principale (201).
